# EUROPEAN PATENT APPLICATION

(11) **EP 3 611 003 A1**
(43) Date of publication of application: **19.02.2020**
(21) Application number: 18188690.4
(22) Date of filing: 13.08.2018
(51) Int. Cl.: B29C 39/10, B29C 39/32, B29C 35/04

(54) **METHOD TO TREAT A BODY WITH A TREATMENT FLUID AND TREATMENT APPARATUS FOR PERFORMING THE METHOD**

(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

Method to treat a body (21) with a treatment fluid, comprising the steps:
S1 arranging a first container element (1) adjacent to an outer surface of the body,
S2 arranging a second container element (1a) adjacent to the outer surface and adjacent to the first container element,
S3 sealing the first container element with the second container element, preferably with a sealing element, thereby forming a treatment container (3) accepting at least a segment of the body and arranged to accept the treatment fluid,
S4 filling the treatment fluid into the treatment container, whereupon a layer of the treatment fluid is held between a container wall (4) of the treatment container and the body,
S5 forming a layer of gelled treatment fluid (gelled layer) inside the treatment container and on the outer surface (22).

## Description

The present invention relates to a method to treat a body with a treatment fluid and a treatment apparatus arranged for performing the method. The invention is explained with respect to a stator of an electrical generator and the invention can be used for any other body, advantageously.

A method known to the applicant involves submerging the body in a treatment fluid held in a basin.

### Problem and solution

The body to be treated can be rather bulky and its handling can cause quite some effort.

It is an object of the present invention to provide a method allowing to treat the body with less cost and effort.

The above object is solved by the method according to claim 1 (first aspect) and a treatment apparatus arranged for performing the method (second aspect). Preferred embodiments of the invention form the respective subject matter of the depending claims.

The method according to the first aspect serves to treat a body with a treatment fluid and comprises the steps:
- S1: arranging a first container element adjacent to an outer surface of the body,
- S2: arranging a second container element adjacent to the outer surface and adjacent to the first container element,

- S3: sealing the first container element with the second container element, thereby forming a treatment container accepting at least a segment of the body and being arranged to accept the treatment fluid,
- S4: filling the treatment fluid into the treatment container, whereupon a layer of the treatment fluid is held between a container wall of the treatment container and the body,
- S5: forming a layer of gelled treatment fluid (gelled layer) inside the treatment container and on the outer surface.

Step S2 can be repeated such that the treatment container is composed from more than two container elements. Also, the step of sealing (S3) can be repeated for each additional container element.

With the claimed method, the treatment container can be built to resemble the shape of the body to be treated. Further, the treatment container can be built around the body to be treated rather than having to move and put the body into an existing container, particularly when disassembling the body to be treated would be rather difficult, costly and/or could damage the body or one of its parts. A cavity to be filled with treatment fluid and arranged between an element wall section and the outer surface is limited by arranging the container elements adjacent to the body. The treatment container need not enclose the entire body. The volume inside the formed treatment container can be smaller compared with the volume of a standard container. Thereby, treatment fluid can be saved. Also, the claimed method can be applied to a body which has been used over an extended period of time to protect it for further use, advantageously.

Within the concept of the present invention, a container element is a part of a superordinate treatment apparatus and its treatment container. The container element contributes to at least partially limit a volume or cavity arranged for accepting the treatment fluid. The container element can be combined with one or more additional container elements of the same or of different geometry for at least partially enclosing a body to be treated. Two of these container elements are referred to as the first container element and the second container element. Some of the apparatus' container elements are addressed as an additional or as an auxiliary container element. The container element has one or more element wall sections, two of which may form an angle and/or can be connected by a curved element wall section. One of the element wall sections can be arranged to be spaced apart from the outer surface of the body to be treated. Another of the element wall sections may abut on the outer surface of the body or on a sealing element between the element wall section and the outer surface.

### Preferred embodiments

Preferred embodiments explained in the following can be combined with each other, advantageously, unless stated otherwise.

During step S2' of a preferred embodiment, an additional container element is arranged adjacent to the outer surface of the body to be treated and adjacent to one or more of the first, second and another additional container element. The additional container element can be similar to the first and second element. During step S3', the additional container element is sealed with one or more of the first, second and another additional container elements, thereby forming the treatment container accepting at least a segment of the body and being arranged to accept the treatment fluid. This may help to enclose larger bodies or larger segments of the body. Also, the size and weight of each of the container elements can be smaller.

According to a preferred embodiment, a cavity is formed between an element wall section of the first and/or second container element and the outer surface facing the element wall section, particularly during step S1 and/or S2. The cavity can define the thickness or maximum thickness of the gelled layer. The cavity is arranged inside the treatment container and may accept the treatment fluid.

Preferably, the first and second container elements are dimensioned and positioned such that the formed treatment container extends along an arc of 90° or less of a circular body to be treated. This may help to save treatment fluid and energy, when only an angular segment of the body shall be treated.

Step S2 or S3 of another preferred embodiment also involves mechanically connecting the container elements by clamping a flange of the first container element with a flange of the second container element, wherein the flanges extend into the environment when the container elements are arranged adjacent to each other. This can reduce the effort when forming the treatment container.

Step S5 of a preferred embodiment also involves heating the treatment fluid and/or the body (step S5'). Hot air, a hot inert gas or electrical heating can be employed. An electrical heating element can be arranged on the body, on the treatment container and/or on one of the container elements. As the volume inside the formed treatment container can be smaller compared with the volume of a standard container, energy for heating the treatment fluid can be reduced. During preferred step S17, which can be performed before step S5', excess treatment fluid is drained from the treatment container, particularly to be reused. This may help to reduce the cost of treating the body.

In a preferred embodiment, the temperature of the body to be treated is increased to a first temperature before the treatment fluid is filled into the treatment container (step S5a). Thus, the order of steps can be S1, S2, S3, S5a, S4 followed by S5. This may help to improve the material connection between the gelled layer and the body to be treated.

A preferred embodiment further includes step:
- S6: Setting a relative pressure inside the treatment container or cavity, before and/or during step S4.
The pressure inside the treatment container may be regulated by extracting air during step S6, preferably before step S4. Partial vacuum can be created during step S6. After the desired pressure is achieved in the treatment container, the treatment fluid is filled into the treatment container. While the pressure is reduced inside the treatment container, air can be drawn out of the body to be treated. When filling the treatment fluid into the treatment container subsequently, the treatment fluid may intrude better into the body. When the pressure is increased inside the treatment container, driving treatment fluid into the body may be improved.

In another preferred embodiment, a sealing element is inserted between the first and second container element or between the treatment container and the outer surface (step S7). This may allow to reduce unwanted openings through which treatment fluid can leak into the environment or through which air can enter the treatment container. Further, the body may also contribute to confining the treatment fluid inside the treatment container. This can help to save cost and effort for treating the body.

Another preferred embodiment also comprises at least one of the steps:
- S8: rearranging the first and/or the second container element with respect to the body such that a channel is formed between the gelled layer and the container wall, and/or
- S9: heating the gelled layer, thereby forming a cured layer on the outer surface of the body.
The channel permits to drive a volume flow of hot air or of a hot inert gas along the gelled layer for curing it during step S9. Heating could be achieved by an exothermal reaction in the gelled layer. The gas of the volume flow can be chosen to cause heating the gelled layer by a chemical reaction with the gelled layer. The gas of the volume flow can be chosen to form a protective surface on the gelled layer. The temperature achieved during step S9 can be higher than the temperature of step S5'. This may reduce the effort for treating the body. Excess treatment fluid is drained from the treatment container during preferred step S17, preferably before step S9. The excess treatment fluid can be reused. This may help to reduce the cost of treating the body.

According to another preferred embodiment, one or both of the following steps are executed:
- S10: arranging an auxiliary container element between the first and second container elements or adjacent to the first or second container element, and/or
- S11: replacing the first or second container element by a larger auxiliary container element.
With these steps, the treatment container can be regenerated. After regenerating, the treatment container can have a larger volume.

In another preferred embodiment, one or both of the following steps are executed:
- S11a: replacing the first or second container element by a smaller auxiliary container element, and/or
- S12: removing the first or second container element,
The treatment container can be regenerated with these steps. After regenerating, the treatment container can have a smaller volume.

The auxiliary container element may be smaller than or may have a shape different from that of the first and/or second container element. End faces of the auxiliary container element are angled to match the respective end face of the first and second container elements. The auxiliary container element particularly contributes to reforming the regenerated treatment container with a larger or smaller volume. This may offer more liberty when regenerating the treatment container and/or forming the channel. A sealing element can be inserted between the auxiliary container element and the first container element or between the auxiliary container element and second container element. The channel permits to drive a volume flow of a hot gas along the gelled layer for curing it during step S9. The gas of the volume flow can be chosen to form a protective surface on the gelled layer. This may reduce the effort for treating the body.

Preferably, steps S10, S11, S11a and/or S12 involve mechanically connecting two of the container elements by clamping a flange of each of these container elements, wherein the flanges extend into the environment when the container elements are arranged adjacent to each other. This can reduce the effort when forming or regenerating the treatment container.

A preferred embodiment further includes step S16, during which one or more of the first, second, additional and auxiliary container elements are sealed with an outer surface of the body to be treated. This may allow to reduce unwanted openings through which treatment fluid can leak into the environment or through which air can enter the treatment container. Further, the body may also contribute to confining the treatment fluid inside the treatment container. This can help to save cost and effort for treating the body.

In a preferred embodiment, one or both of the following steps are executed:
- S13: transporting the container elements to a site where the body to be treated is located,
- S14: dismantling the treatment container and removing its container elements from the body.
Step S13 may offer the advantage that a bulky or heavy body to be treated may stay where it is. Transporting the smaller and lighter, preferably prefabricated, container elements to the site may reduce the cost and effort while treating the body with a treatment fluid. Following step S14, the container elements can be reused and may be moved to the site of another body to be treated with a treatment fluid.

Another preferred embodiment involves step
- S15: shifting the treatment container along the body to be treated, preferably after step S5 or S8.
With step S15, a cavity can be formed with and limited by an element wall section and the body to be treated. The cavity can be a channel suitable for the heating of step S9. The segment of the body accepted by the treatment container after step S15 may overlap with the body segment accepted before step S15. Step S15 may be performed twice or several times. This may allow to limit or reduce the number of container elements to be built.

A preferred embodiment of the method is particularly suitable for treating a circular body having a central axis, such as a rotor or stator of a generator. After steps S1-S3, the treatment container extends along an arc of 90° or less of the circular body and a sealing element, preferably a caulking strip, is inserted between the treatment container and the body. The body contributes to confining the treatment fluid. First and second container elements preferred for this method have a curved element wall section extending along a circumference about the body's central axis. The curved element wall section has a radius greater than the radius of the outer surface of the circular body to leave the cavity for the treatment fluid. Further, the first and second container elements have a flat element wall section mechanically connected with the curved element wall section and extending essentially parallel to an end face of the circular body. This flat element wall section can be limited by two arcs and two straight lines each extending radially from the central axis. There can be two such flat element wall sections spaced apart along the central axis. After steps S4 and S5, the treatment container can be rotated about the central axis such that the curved element wall section remains essentially parallel to a circumference of the circular body during step S15. Thereafter, steps S3-S5 are executed again and another step S15 can follow. The circular body is treated during repetitions of steps S3, S4, S5 and S15. This may help to save treatment fluid and energy while generating the gelled layer.

Preferably, the gelled layer is cured after rearranging the first and/or the second container elements with step S8 and after inserting an auxiliary container element with step S10, thereby obtaining the regenerated treatment container with a channel for step S9. Steps S8, S9 can be repeated after step S15. Alternatively, the gelled layer is cured with steps S1, S2, S3, S4, S5, S9 and S15, particularly when a channel for a volume flow of hot gas is created with step S15.

According to a preferred embodiment, the body to be treated is one of the following: a part of or used for an oil rig or oil drilling platform, a part of a generator of a water or wind turbine installation, a part exposed to a corrosive fluid or atmosphere, a part used in chemical industry, pharma industry, food industry, electrical industry, offshore equipment, structures close to seashore in saline environment, a part of an electrical machine, a part of a generator, a part of an electrical motor, a part of a transformer, a choke, a reactor and an inductor.

In another preferred embodiment, the treatment fluid is chosen from the following group including: resins of Epoxy, Polyurethane, Polystyrene, Acrylic, Phenol Formaldehyde, Urea Formaldehyde, Polymers like ABS, Polyamide, PEEK, PET, PTFE, PVC, PVDF, Elastomers, a gas or vapour of a corrosion inhibitor, fluids for surface protection.

The treatment apparatus according to the second aspect is arranged for performing one of the method explained above. The treatment apparatus comprises
- a first and a second container element, which are arranged for being sealed with each other to form a treatment container, the treatment container being arranged to accept at least a segment of the body and to accept the treatment fluid when the first and second container elements are sealed with each other, and
- a temperature control device arranged for heating the treatment fluid and/or the body inside the treatment container.

The treatment container of the claimed treatment apparatus serves to at least partially enclose the body to be treated. The treatment container can be built such that the cavity is limited by an outer surface of the body to be treated and an adjacent treatment container wall section or element wall section. The cavity can define the intended thickness of the gelled layer. Further, the treatment container can be built around the body to be treated rather than having to move and put the body into an existing container. The volume to be filled with treatment fluid is limited by the container elements being arranged adjacent to the body. Thus, the volume inside the formed treatment container can be smaller compared with the volume of a standard container. Thereby, treatment fluid and energy for heating the treatment fluid can be saved.

Preferably, the first and second container elements are dimensioned and positioned such that the formed treatment container extends along an arc of 90° or less of a circular body to be treated. This may help to save treatment fluid and energy, when only an angular segment of the body shall be treated.

Preferably, the treatment apparatus has one or more additional container elements, similar to the first and second element, to be integrated into the treatment container. This may help to enclose larger bodies or larger segments of the body. Also, the size and weight of each of the container elements can be smaller.

In another preferred embodiment, the temperature control device is arranged to provide hot or cold air, or an inert gas to the treatment container. The gas of the volume flow can be chosen to cause heating the gelled layer by a chemical reaction with the gelled layer. The temperature control device can have a pump arranged for propelling the gas into the treatment container. One of the container elements can be fluidly connected with the pump and another of the container elements can have a vent. Additionally or alternatively, the temperature control device can comprise an electrical heating element arranged on the body to be treated, on the treatment container or on one of the container elements. The temperature control device can have a temperature sensor arranged to detect the temperature of a surface of the body to be treated. The temperature sensor can be arranged inside one of the container elements and/or on the surface of the body to be treated. This may help to control or limit the temperature of the treatment fluid while gelling and/or curing.

A preferred embodiment comprises a sealing element which is arranged for sealing the first container element with the second container element or for sealing the treatment container with the outer surface of the body. The sealing element may be a gasket or a sealing cord or a caulking strip.

This may allow to reduce unwanted openings through which treatment fluid can leak into the environment and/or through which air can enter the treatment container.

Another preferred embodiment comprises a pressurising device, arranged for setting a relative pressure inside the treatment container. The pressurising device may have a pump, a valve, a pressure sensor and/or a temperature sensor. As the pressure is reduced inside the treatment container, air can be drawn out of the body to be treated. When filling the treatment fluid into the treatment container subsequently, the treatment fluid may intrude better into the body. When the pressure is increased inside the treatment container, filling of the body with treatment fluid may be improved.

A further preferred embodiment comprises an auxiliary container element shaped to be arranged between the first and second container element and to be sealed with the first and second container elements. The auxiliary container element offers more liberty when regenerating the treatment container and/or forming the channel. The channel permits to drive a volume flow of hot air or of a hot inert gas along the gelled layer for curing it. The gas of the volume flow can be chosen to form a protective surface on the gelled layer. This may reduce the effort for treating the body.

A preferred embodiment comprises a fluid supply device which is arranged for filling the treatment fluid into the treatment container. The fluid supply device may have a fluid storage tank and a pump to reversibly supply treatment fluid from the fluid storage tank to the treatment container or in the opposite direction.

In a preferred embodiment, the first, the second and/or the auxiliary container element (jointly addressed with "container element") comprises one or more element wall sections arranged and shaped to limit a cavity in which the layer of treatment fluid can be held adjacent to the body to be treated and inside the treatment container. The cavity can form the channel suitable for the heating of step S9 as previously explained.

Preferably, at least one of the element wall sections is curved. When the body to be treated has a curved outer surface section, the size of the cavity between the respective element wall section and an adjacent outer surface of the body can be limited, whereby treatment fluid may be saved.

Each of at least two of container elements can have at least one flange arranged to extend into the environment when the at least two container elements are arranged adjacent to the body to be treated and adjacent to each other. The flanges of two adjacent container elements can be mechanically connected with a clamp or clip. This can reduce the effort when forming the treatment container.

A stringer can be mechanically or materially connected with an outer wall of one of the container elements. This may help the treatment container element in supporting the weight of the treatment fluid and/or may serve to increase the stiffness of the container element wall.

Preferably, at least one of the container elements has the shape of a circle sector limited by two radii and an arc. At least one of the container elements can have the outer shape of a box lacking two or three walls.

### Exemplary embodiments

Further advantages become apparent to the skilled person from the following exemplary embodiments.

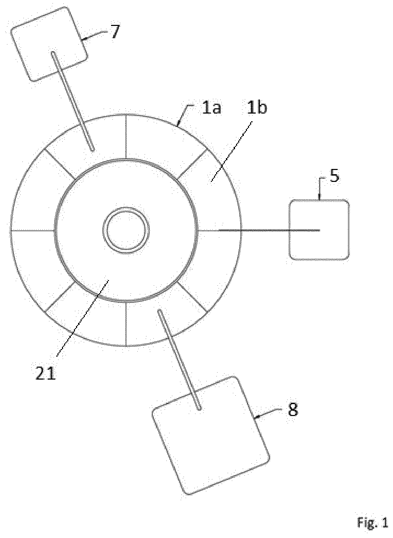

Figure 1 shows an exemplary treatment apparatus and a body to be treated with a treatment fluid. The round body 21 is partially enclosed by a treatment container. The container's first 1a and second 1b container elements are adjacent to and mechanically connected with each other. The treatment container has additional container elements to partially enclose the body to be treated. The container elements are curved. The treatment apparatus comprises a temperature control device 5, a pressurising device 7 and a fluid supply device 8. The container elements are curved such that the treatment container's shape resembles the body to be treated. The treatment apparatus has additional container elements, similar to the first and second container elements, which are also integrated into the treatment container. The first container element is sealed with the second container elements container and the treatment container is formed. The treatment container can be sealed with the body to be treated. The treatment container is ready for being filled with the treatment fluid by the fluid supply device 8.

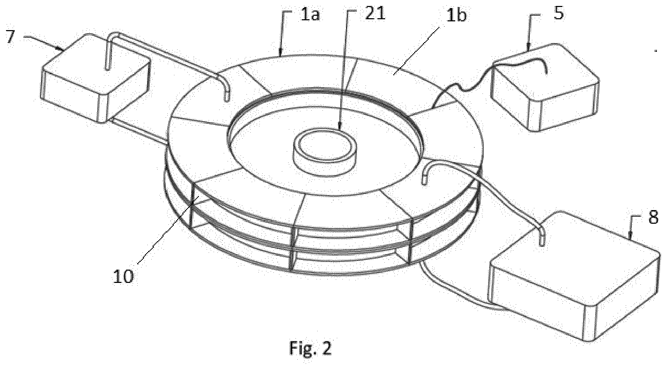

Figure 2 schematically shows the body 21 and the exemplary treatment apparatus from another perspective and the above explanations apply. The treatment container has 16 container elements in total. The treatment container may have more or less than 16 container elements depending on the size of the body to be treated and on the size of the container elements. The treatment container to be used with step S15. The container elements have flanges 10 extending into the environment and arranged for being mechanically connected or clamped (not shown) with an adjacent flange of another container element. The fluid supply device 8 has separate supply and drain lines connecting its fluid storage tank with one of the container elements. The temperature control device 5 comprises a temperature sensor which is arranged inside the treatment container, and/or on the body to be treated. The temperature sensor's cable is arranged between two of the container elements.

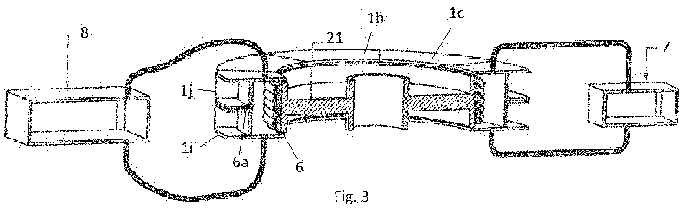

Figure 3 schematically shows a cross section through the body 21 and through the exemplary treatment apparatus from another perspective and the above explanations apply. The additional container elements 1c, id are also integrated into the treatment container. The body 21 is a stator of an electrical generator of a wind turbine installation and its windings need to be impregnated. The dimensions of the stator are such that the additional container elements 1i, 1j are stacked along the stator's axis of symmetry, which is arranged vertically in fig. 3. Container element 1j e.g. has two element wall sections which are arranged for limiting the confining the treatment fluid, flanges for mechanically connecting with adjacent container elements and an opening for the treatment fluid in one of the element wall sections. A sealing element 6a is arranged between the two additional container elements 1i, ij. There is another sealing element 6 between the treatment container and the body 21. So the body contributes to confining the treatment fluid inside the treatment container.

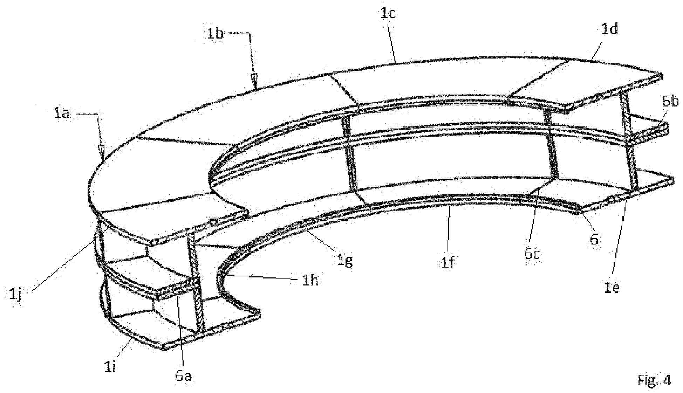

Figure 4 schematically shows that ten curved container elements 1a-1j form more than half of the treatment container of figs. 1-3. There are sealing elements 6, 6a, 6b, 6c, which can be a gasket or a sealing cord or a caulking strip, between two of the container elements 1a-1j. Sealing cord 6c is arranged between container elements 1e-1i and the body (not shown). Container elements 1i, 1j have openings through which the treatment fluid can be fed and excess treatment fluid can be drained. Container elements id, 1e have openings for the pressurising device.

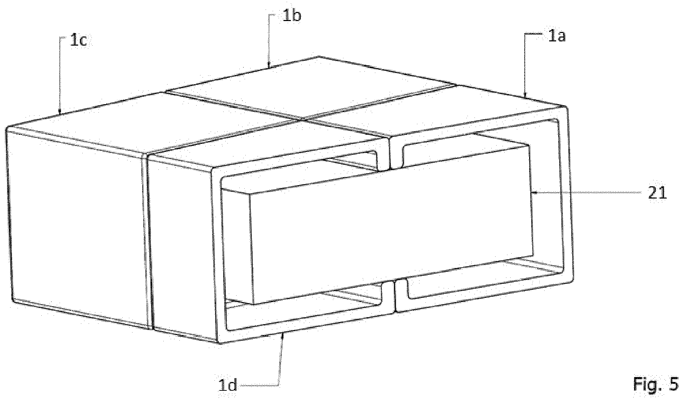

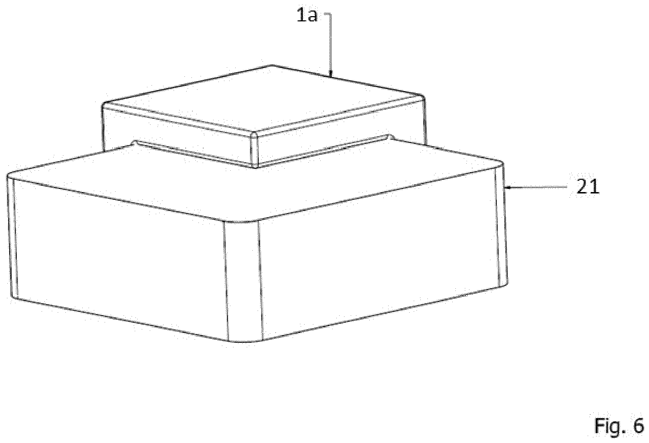

Fig. 5 schematically shows a cross section through another body to be treated and adapted container segments. These rather box shaped container elements 1a, 1b, 1c, 1d are better adapted to the geometry of the body 21. Here, the treatment container surrounds the body entirely. Sealing elements are arranged between the container elements. The fluid supply device and temperature control device are not shown. Fig. 6 schematically shows that one of the container elements 1a covers a section of the body 21, only.

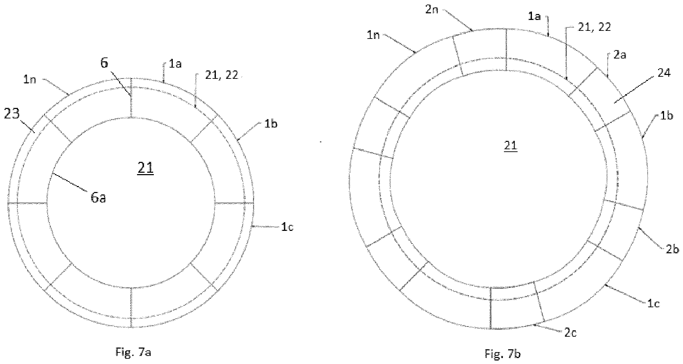

Figures 7a and 7b schematically show the exemplary treatment apparatus in two different states. In the first state schematically shown by fig. 7a, the container elements 1a, 1b, 1b, 1n form the treatment container which at least partially encloses the circular body 21 to be treated. The body could be a rotor or stator of a generator. The container elements are sealed with each other and with the body. Sealing elements 6, 6a are arranged between two adjacent container elements and between the container elements and the body. There is a cavity 23 formed between the outer surface 22 (dashed line) of the body 21 and an element wall section of container elements. This cavity can define the thickness of gelled layer of treatment fluid and can accept the treatment fluid. Steps S4, S5 of the claimed method still need to be performed. The fluid supply device and the temperature control device of the treatment apparatus are not shown.

In the second state schematically shown by fig. 7b, a gelled layer of treatment fluid has been formed on the outer surface of the body. The treatment container has been regenerated after inserting auxiliary container elements 2a, 2b, 2c, 2n between container elements 1a, 1b, 1b, 1n and sealing the container elements with each other and with the body. There is a channel 24 formed between the body or its gelled layer and the container wall or its element wall sections. In the second state, the treatment container and the body are ready for the step of heating the gelled layer or treatment fluid and/or the body, thereby forming a layer of cured treatment fluid inside the treatment container and on the outer surface.

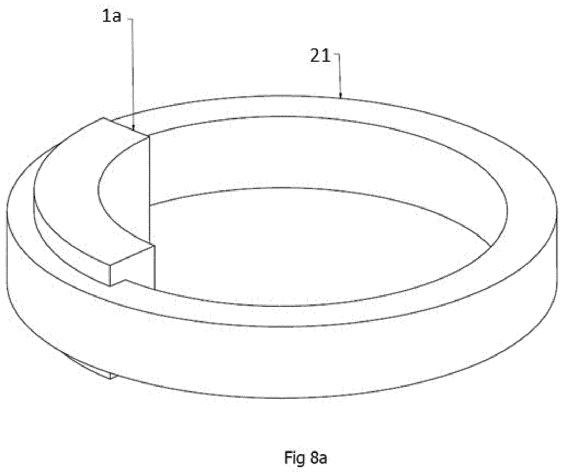

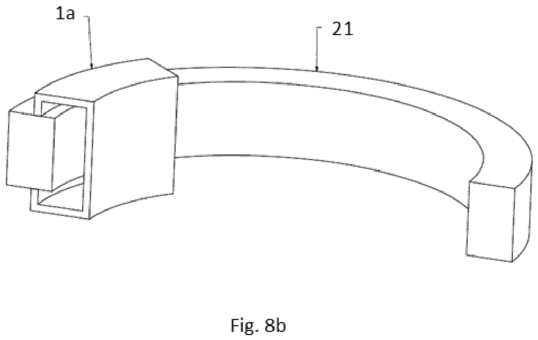

Figures 8a and 8b schematically show a curved container element 1a which is adapted for enclosing a section of an inner circumference of the annular body 21. The body could be a part of a generator. A sealing element can be arranged between the container element and the body. In fig. 8b, the container element 1a is partly cut away. A cavity for the treatment fluid limited by the container element 1a and the body.

### Reference signs

- 1, 1a, 1b, 1c, 1d, 1e, 1f, 1g, 1h, 1i, ij, 1n: container element
- 2: auxiliary container element
- 3: treatment container
- 4: container wall
- 5: temperature control device
- 6: sealing element
- 7: pressurising device
- 8: fluid supply device
- 10: flange of a container element
- 11: stringer
- 21: body to be treated
- 22: outer surface of body to be treated
- 23: cavity between an element wall section and the outer surface
- 24: channel between an element wall section and the gelled layer of treatment fluid

## Claims

1. Method to treat a body (21) with a treatment fluid, comprising the steps:
S1 arranging a first container element (1a) adjacent to an outer surface (22) of the body,
S2 arranging a second container element (1b) adjacent to the outer surface (22) and adjacent to the first container element,
S3 sealing the first container element with the second container element, thereby forming a treatment container (3) accepting at least a segment of the body and being arranged to accept the treatment fluid,
S4 filling the treatment fluid into the treatment container, whereupon a layer of the treatment fluid is held between a container wall (4) of the treatment container and the body,
S5 forming a layer of gelled treatment fluid (gelled layer) inside the treatment container and on the outer surface.

2. Method according to claim 1, wherein a cavity (23) is formed between an element wall section of the first and/or second container element and the outer surface facing the element wall section.

3. Method according to one of the preceding claims, wherein the temperature of the body to be treated is increased to a first temperature before the treatment fluid is filled into the treatment container (step S5a).

4. Method according to one of the preceding claims, also including step
S6 setting a relative pressure inside the treatment container or cavity, before and/or during step S4.

5. Method according to one of the preceding claims, further including step
S7 inserting a sealing element (6) between the first and second container element or between the treatment container and the outer surface (22).

6. Method according to one of the preceding claims, further comprising at least one of the steps:
S8 rearranging the first and/or the second container elements with respect to the body such that a cavity or channel (24) is formed between the gelled layer and the treatment container wall, and/or
S9 heating the gelled layer, thereby forming a cured layer on the outer surface of the body.

7. Method according to claim 6, also including at least one of the steps
S10 arranging an auxiliary container element (2) between the first and second container elements or adjacent to the first or second container element, and/or
S11 replacing the first or second container element with a larger auxiliary container element (2),
thereby regenerating the treatment container.

8. Method according to claim 6, also including at least one of the steps
S11a replacing the first or second container element with a smaller auxiliary container element (2), and/or
S12 removing the first or second container element,
thereby regenerating the treatment container.

9. Method according to one of the preceding claims, including at least one of the following steps
S13 transporting the container elements to a site where the body to be treated is located,
S14 dismantling the treatment container and removing its container elements from the body.

10. Method according to one of the preceding claims, including step
S15 shifting the treatment container along the body to be treated, preferably after step S5 or S9.

11. Method according to one of the preceding claims, wherein the body to be treated is one of the following: a part of or used for an oil rig or oil drilling platform, a part of a generator of a water or wind turbine installation, a part exposed to a corrosive fluid or atmosphere, a part used in chemical industry, pharma industry, food industry, electrical industry, offshore equipment, structures close to seashore in saline environment, a part of an electrical machine and an electrical component.

12. Method according to one of the preceding claims, wherein the treatment fluid is chosen from the following group including: resins of Epoxy, Polyurethane, Polystyrene, Acrylic, Phenol Formaldehyde, Urea Formaldehyde, Polymers like ABS, Polyamide, PEEK, PET, PTFE, PVC, PVDF, Elastomers, a gas or vapour of a corrosion Inhibitor, fluids for surface protection.

13. Treatment apparatus arranged for performing the method of one of the preceding claims, the treatment apparatus comprising
a first (1a) and a second container element (1b), which are arranged for being sealed with each other to form a treatment container (3), the treatment container being arranged to accept at least a segment of the body and to accept the treatment fluid when the first and second container elements are sealed with each other,
a temperature control device (5) arranged for heating the treatment fluid and/or the body inside the treatment container.

14. Treatment apparatus according to claim 13, further comprising a sealing element (6) arranged for sealing the first container element with the second container element or for sealing the treatment container with the outer surface (22) of the body.

15. Treatment apparatus according to one of claims 13 to 14, further comprising a pressurising device (7), arranged for setting a relative pressure inside the treatment container.

16. Treatment apparatus according to one of claims 13 to 15, further comprising an auxiliary container element (2) shaped to be arranged between the first and second container element and to be sealed with the first and second container elements.

17. Treatment apparatus according to one of claims 13 to 16, further comprising a fluid supply device (8) arranged for filling the treatment fluid into the treatment container.

18. Treatment apparatus according to one of claims 13 to 17, wherein the first, the second and/or the auxiliary container element comprises one of more element wall sections (9) arranged and shaped to limit a cavity in which the layer of treatment fluid can be held adjacent to the body (21) to be treated and inside the treatment container.
